# EUROPÄISCHE PATENTSCHRIFT

(11) **EP 2 146 113 B1**
(45) Veröffentlichungstag und Bekanntmachung des Hinweises auf die Patenterteilung: **02.11.2011**
(21) Anmeldenummer: 09008857.6
(22) Anmeldetag: 07.07.2009
(51) Int. Cl.: F16H 15/42, C10M 171/00

(54) **Reibringgetriebe mit einem Reibring und Verfahren zum Herstellen eines Reibkegels**
Friction ring drive with a friction ring and method for manufacturing the same
Mécanisme de transmission à anneau de friction et procédé de fabrication d'un cône de friction

(30) Priorität: 16.07.2008 DE 102008033329
(43) Veröffentlichungstag der Anmeldung: 20.01.2010
(73) Patentinhaber: Rohs, Ulrich, 52351 Düren (DE)
(72) Erfinder: Rohs, Ulrich, 52351 Düren (DE)
(74) Vertreter: Reuther, Martin

(56) Entgegenhaltungen:
- WO-A2-2007/025522
- CH-A- 405 856
- FR-A- 1 079 768
- FR-E- 31 504

## Beschreibung

Die Erfindung betrifft ein Reibringgetriebe mit einem Reibring, mit einem ersten Reibkegel umfassend eine erste Reibringlauffläche, mit einem zweiten Reibkegel umfassend eine zweite Reibringlauffläche und mit axialen Reibringsicherungsmittel zum Verhindern eines kritischen Reibringlaufflächenüberschreitens des Reibrings, bei welchem der Reibring an den Reibringlaufflächen und in einem Spalt zwischen den Reibkegeln axial verlagerbar angeordnet ist. Des Weiteren betrifft die Erfindung ein Verfahren zum Herstellen eines Reibkegels mit einer Lauffläche für einen Reibring eines Reibringgetriebes, bei welchem der Reibkegel aus einem metallischen Material geschmiedet wird.

Gattungsgemäße Reibringgetriebe sind aus dem Stand der Technik gut bekannt und werden insbesondere im Kraftfahrzeugwesen als Kräfte- bzw. Drehmomentwandler häufig eingesetzt.

Ein gattungsgemäßes Reibringgetriebe, welches alle Merkmale des oberbegriffs des Anspruchs 1 aufweist, ist beispielsweise aus der internationalen Patentanmeldung WO 2007/025522 A2 bekannt, welches im Wesentlichen aus einem ersten Reibkegel, einem zweiten Reibkegel sowie einem diese beiden Reibkegel wirkverbindende Reibkörper als auch weitere Getriebeglieder umfasst. Während der erste Reibkegel und der zweite Reibkegel in einem fixen Abstand zueinander jeweils um eine eigene Rotationsachse rotieren können, kann der Reibkörper in diesem Abstand entlang der Rotationsachsen der Reibkörper axial verlagert werden, wozu der Reibkörper in einer geeigneten Verstelleinrichtung gelagert ist. Um die Betriebssicherheit des Reibkegelgetriebes wesentlich zu verbessern werden einerseits Fluidmittel, die zwischen den Hauptgetriebegliedern wirken können mittels einer Fluidmittelzufuhr unmittelbar an die Wirkbereiche der Hauptgetriebeglieder zugeführt. Darüber hinaus können mit einem redundanten Regelmechanismus dem Reibkegelgetriebe Notlaufeigenschaften zugewiesen werden, mittels welchen sichergestellt wird, dass das Kegelreibringgetriebe nahezu immer betriebsfähig bleibt, selbst dann, wenn beispielsweise der Verstellmechanismus des Reibkörpers nicht mehr ordnungsgemäß funktionieren kann. Auch hierdurch kann in vorteilhafter Weise die Betriebssicherheit des gesamten Reibkegelgetriebes erhöht werden.

Es ist Aufgabe vorliegender Erfindung ein gattungsgemäßes Reibringgetriebe insbesondere derart weiterzuentwickeln, dass die Betriebssicherheit eines gattungsgemäßen Reibringgetriebes weiter verbessert ist. Diese Aufgabe wird durch ein Reibringgetriebe nach Anspruch 1 gelöst. Die Ansprüche 2-9 betreffen besondere Ausführungsarten des Reibringgetriebes nach Anspruch 1.

Die Aufgabe der Erfindung wird zum einen von einem nicht beanspruchten Reibringgetriebe mit einem Reibring, mit einem ersten Reibkegel umfassend eine erste Reibringlauffläche, mit einem zweiten Reibkegel umfassend eine zweite Reibringlauffläche und mit axialen Reibringsicherungsmitteln zum Verhindem eines kritischen Reibringlaufflächenüberschreitens des Reibrings gelöst, bei welchem der Reibring an den Reibringlaufflächen und in einem Spalt zwischen den Reibkegeln axial frei verlagerbar angeordnet ist, wobei sich das Reibringgetriebe dadurch besonders auszeichnet, dass die axialen Reibringsicherungsmittel an wenigstens einem der Reibkegel angeordnet sind. Hierdurch können bei geeigneter Ausgestaltung die axialen Reibringsicherungsmittel an wenigstens einem der Reibkegel angeordnet und konstruktiv besonders einfach derartige axiale Reibringsicherungsmittel in einem Reibringgetriebe integriert werden. Insbesondere kann mit den axialen Reibringsicherungsmitteln an wenigstens einem der Reibkegel auf zusätzliche Bauteile, beispielsweise an einer Führungseinrichtung des Reibrings, verzichtet werden, wodurch das Reibringgetriebe sehr kompakt gebaut werden kann.

Der Begriff "Reibringgetriebe" erfasst vorliegend im Speziellen solche Reibringgetriebe, bei welchen der Reibring einen der beiden Reibkegel des Reibringgetriebes umschließt, das heißt, dass einer der beiden Reibkegel innerhalb des Reibrings angeordnet ist und hierbei an der Innenseite des Reibrings reiben kann, während der weitere der beiden Reibkegel am Außenumfang des Reibrings reiben kann. Es versteht sich, dass die axialen Reibringsicherungsmittel auch an Reibringgetrieben vorteilhaft zum Einsatz gelangen können, bei welchen die mit den Reibring wechselwirkenden Reibkörpern von einer Kegelgestalt abweichen oder eine andere Anordnung zwischen Reibring und Kegeln vorliegt. Jedoch bezieht sich die vorliegende Erfindung schwerpunktmäßig auf Reibringgetriebe mit kegelförmig gestalteten Reibkörpern, da mit ihnen besonders einfach eine Kräfte bzw. Momentenumwandlung erzielt werden kann.

Darüber hinaus wird die Aufgabe auch von einem nicht beanspruchten Reibringgetriebe mit einem Reibring, mit einem ersten Reibkegel umfassend eine erste Reibringlauffläche, mit einem zweiten Reibkegel umfassend eine zweite Reibringlauffläche gelöst, bei welchem der Reibring an den Reibringlaufflächen in einem Spalt zwischen den Reibkegeln axial frei verlagerbar angeordnet ist und welches sich dadurch auszeichnet, dass zumindest einer der beiden Reibkegel Mittel zum Verjüngen des Spaltes aufweist.

Eine außergewöhnlich gute Möglichkeit den Reibring bzw. die Reibringlaufflächen axial im Sinne vorliegender Erfindung zu sichern, besteht gemäß Anspruch 3 darin, Mittel an den Reibkegeln vorzusehen, mittels welchen der Spalt zwischen den beiden Reibkegeln des Reibringgetriebes verjüngt bzw. verkleinert werden kann, so dass es dem Reibring selbst in einem kritischen Betriebszustand des Reibringgetriebes nicht ermöglicht ist, die Reibringlaufflächen zu verlassen bzw. über die Enden zumindest eines der beiden Reibkegel axial hinaus zu gelangen. Hierdurch kann nahezu immer gewährleistet werden, dass das vorliegende Reibringgetriebe zumindest auf Grund dessen nicht ausfällt, dass die beiden Reibkegel mittels des Reibringes nicht mehr miteinander kommunizieren können.
Gemäß Anspruch 2 sind die axialen Reibringsicherungsmittel jeweils mit einem Reibkegel umlaufend ausgebildet. Auf diese Weise können einerseits die Laufruhe bei Erreichen der Reibringsicherungsmittel maximiert und andererseits ein Verschleiß bei Erreichen eines entsprechenden Reibringsicherungsmittels minimiert werden.

Hierbei können die entsprechenden Reibringsicherungsmittel einerseits beispielsweise umlaufende Rollen oder Walzen aufweisen, die entsprechend ortsfest oder an separaten Einrichtungen verlagerbar vorgesehen sind, wobei derartige Einrichtungen nicht mit den ohnehin vorhandenen Verstellmitteln, mit den der Reibring und mithin das Übersetzungsverhältnis während eines ordnungsgemäßen Betriebs verstellt werden können, zu verwechseln sind. Andererseits können die Reibringsicherungsmittel auch fest an dem Reibring und/oder an wenigstens einem Reibkegel vorgesehen sein, woraus unmittelbar ein entsprechendes Umlaufen folgt.

Hierbei ist zu betonen, dass zu den drei vorgenannten Lösungswegen, die Wo 2007/025522 und die US 6,093,131 beispielsweise gattungsgemäßen Stand der Technik darstellen und insbesondere auch die axial freie Verlagerbarkeit im Detail erläutern. Letztere bedeutet, insbesondere beispielsweise in Abweichung zu den in der CH 405 856 oder in der FR 31 504 offenbarten Kegelreibringgetrieben, dass der Reibring zur Verstellung des Übersetzungsverhältnisses lediglich in seinem Winkel bezüglich der Kegel entsprechend angestellt wird und ansonsten frei den auf ihn durch diese Winkelanstellung bedingten Kräfte, die von den Reibkegeln auf ihn ausgeübt werden, folgen kann. Bei den Kegelreibringgetrieben nach der CH 405 856 oder der FR 31 504 hingegen ist der Reibring zwangsgeführt und seine Position unmittelbar durch eine axial verstellbare Führungseinrichtung vorgegeben.

Gemäß Anspruch 4 sieht eine bevorzugte Ausführungsvariante vor, dass die axialen Reibringsicherungsmittel dementsprechend an einem ersten Rand der Reibringlauffläche eines ersten der beiden Reibkegel angeordnet sind, dass der Reibring einen gegenüberliegenden ersten Rand der Reibringlauffläche eines weiteren der beiden Reibkegel nicht oder nur unwesentlich überschreiten kann. Hierdurch kann vorteilhafter Weise erzielt werden, dass jeder der verwendeten Reibringe lediglich an einem seiner Reibringenden bzw. an einem der beiden Ränder einer Reibringlauffläche nur ein axiales Reibringsicherungsmittel aufweisen muss. Somit können die Reibkegel insgesamt gesehen hinsichtlich ihres Gewichtes leichter gebaut werden.

Gemäß Anspruch 5 weisen die axialen Reibringsicherungsmittel an einem axialen Ende einer Reibringlauffläche einen Absatz auf, wobei der Absatz eine Hinterschneidung aufweist, welche einer Reibringlauffläche zugewandt ist.

Durch die Hinterschneidung , welche einer Reibringlauffläche zugewandt ist, kann eine Berührungsfläche, mittels welcher der Reibring bei einem kritischen Betriebszustandes des Reibringgetriebes mit dem Absatz in Berührung kommen kann, wesentlich reduziert werden. Auch kann hierdurch bei geeigneter Ausgestaltung die Laufruhe des Reibrings in diesem kritischen Betriebszustand gegenüber bekannten Lösungen erhöht werden. Auch wird die Belastung des Absatzes und des Reibringes hierdurch verringert, so dass etwaige Beschädigungen weitgehend vermieden werden können.

Die Reibringsicherungsmittel, insbesondere die vorstehend beschriebene Absätze, können eine Anlagefläche aufweisen, die um eine Achse rotiert, die parallel zu der Rotationsachse des Reibrings, also insbesondere axial, wenn der Reibring senkrecht zu den Kegelachsen ausgerichtet ist, ausgerichtet ist. Auf diese Weise kann die Belastung für den Reibring minimiert werden, wenn dieser mit den Reibringsicherungsmitteln in Kontakt kommt. Hierbei versteht es sich, dass eine derartig ausgestaltete Anlagefläche auch unabhängig von den übrigen Merkmalen vorliegender Erfindung für eine Sicherung des Reibringes vorteilhaft ist.

Um die Belastung des Reibringes zu minimieren, kann gemäß Anspruch 8 der Reibring zumindest an seinen den axialen Reibringsicherungsmittel zugewandten Seiten im Bereich seiner Kanten zurückgesetzt ausgebildet sein. Dieses gilt insbesondere für die Kante, die den Reibringsicherungsmittel und dem zugehörigen Reibkegel, an welchem die Reibringsicherungsmittel angeordnet sind, zugewandt ist. Vorzugsweise weist der Reibring an dieser Kante Kantenradien mit einem Radius größer als 1/100 der Reibringbreite, vorzugsweise größer als 1/27 der Reibringbreite, auf.

Die Betriebssicherheit eines gattungsgemäßen Getriebes kann kumulativ oder alternativ zu den vorgenannten Merkmalen der Erfindung auch erhöht bzw. verbessert werden, wenn das Reibringgetriebe als weitere Getriebekomponente ein Traktionsfluid auf Basis eines Naphten-Öls umfasst. Hierbei versteht es sich, dass ein Traktionsfluid auf Basis eines Naphten-Öls auch unabhängig von den übrigen Merkmalen vorliegender Erfindung bei einem Reibringgetriebe mit einem Reibring, mit einem ersten Reibkegel umfassend eine erste Reibringlauffläche, mit einem zweiten Reibkegel umfassend eine zweite Reibringlauffläche und mit einem Traktionsfluid, bei welchem der Reibring an den Reibringlaufflächen in einem Spalt zwischen den Reibkegeln axial verlagerbar angeordnet ist und bei welchem das Traktionsfluid zwischen dem Reibring und den Reibkegeln wirken kann, entsprechend vorteilhaft ist.

Durch Naphten-Öl als Traktionsfluid lässt sich der Drehmomentübertrag bei einem Reibringgetriebe, insbesondere aber bei einem Reibringkegelgetriebe, vorteilhaft gestalten. Überraschender Weise kann hierdurch einerseits ein ausreichendes Reibmoment zwischen den reibend in Wechselwirkung miteinander stehenden Getriebegliedern bereit gestellt werden, ohne dass andererseits zu große Verluste auftreten, was insbesondere gegenüber bekannten Traktionsfluiden, wie beispielsweise mineralische Ölen mit Festpartikeln oder Silikonölen, gilt.

Auch wird die Aufgabe der Erfindung von einem nicht beanspruchten Verfahren zum Herstellen eines Reibkegels mit einer Reibringlauffläche für einen Reibring eines Reibringgetriebes gelöst, bei welchem der Reibkegel aus einem metallischen Material geschmiedet wird, und bei welchem der Reibkegel mit axialen Reibringsicherungsmitteln zum Verhindern eines kritischen Reibringlaufflächenüberschreitens gefertigt wird.

Fertigungstechnisch besonders einfach können die Reibringsicherungsmittel an einem Reibkegel bereitgestellt werden, wenn die Reibringsicherungsmittel an den Reibkegel spanend angearbeitet werden. Vorzugsweise werden gemäß Anspruch 6 die Reibringsicherungsmittel an den Reibkegel angedreht, da sich ein Drehen der Reibringsicherungsmittel bei einer rotationssymmetrischen Getriebekomponente, wie es ein Reibkegel darstellt, bevorzugt anbietet. Dementsprechend ist es vorteilhaft, wenn Reibkegel und entsprechendes Reibringsicherungsmittel einstückig ausgebildet sind.

Weitere Vorteile, Ziele und Eigenschaften vorliegender Erfindung werden anhand nachfolgender Beschreibung anliegender Zeichnung erläutert, in welcher schematisch ein Aufbau eines Reibringgetriebes mit axialen Reibringsicherungsmitteln bzw. mit Mitteln zum Verjüngen eines Spaltes zwischen zwei Reibkegeln sowie einer Getriebekomponente umfassend Naphten-Öl dargestellt sind.

Es zeigt
- Figur 1: schematisch einen Längsschnitt eines Reibringgetriebes hinsichtlich seiner Hauptgetriebeglieder,
- Figur 2: schematisch einen Einlaufbereich hinsichtlich einer Innenseite eines Reibringes des Reibringgetriebes in einer Detailansicht der Figur 1,
- Figur 3: schematisch einen weiteren Einlaufbereich hinsichtlich einer Außenseite des Reibringes des Reibringgetriebes in einer weiteren Detailansicht der Figur 1,
- Figur 4: schematisch einen Querschnitt des Reibringes des Reibringgetriebes nach Figuren 1 bis 3;
- Figur 5: einen schematischen Schnitt durch ein Kegelreibringgetriebe zur Erläuterung einer Führungseinrichtung für den Reibring; und
- Figur 6: eine Aufsicht auf die Anordnung nach Figur 5.

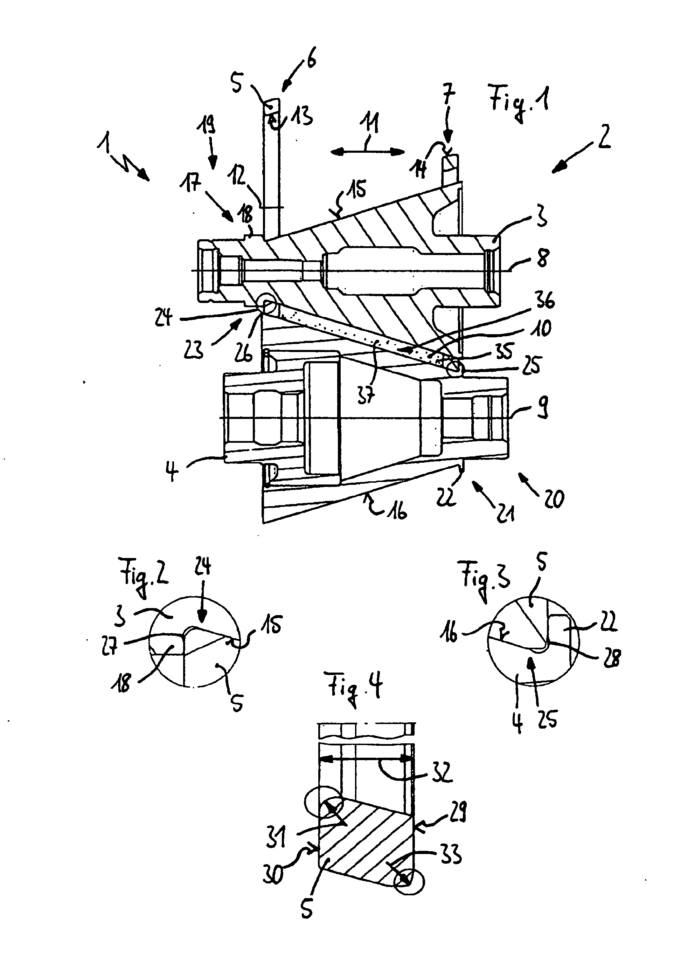

Die in der Figur 1 gezeigten Hauptgetriebeglieder 1 eines Reibringgetriebes 2 umfassen einen ersten Reibkegel 3, einen zweiten Reibkegel 4 und einen Reibring 5, der nach der Darstellung der Figur 1 in einer ersten axialen Endposition 6 und in einer zweiten axialen Endposition 7 dargestellt ist. Der erste Reibkegel 3 rotiert um eine erste Rotationsachse 8, während der zweite *Reibkegel 4 um eine zweite Rotationsachse 9 rotiert.

Die beiden Rotationsachsen 8 und 9 sind derart parallel zueinander angeordnet, dass sich zwischen den beiden Reibkegeln 3 und 4 ein Spalt 10 ergibt, in welchem der Reibring 5 zwischen den axialen Endpositionen 6 und 7 maximal vor und zurück wandern kann. Hierbei rotiert der Reibring 5 um eine Reibringrotationsachse 12 und wirkt mit dem ersten Reibkegel 3 an seiner Innenseite 13 und mit dem zweiten Reibkegel 4 mit seiner Außenseite 14 zusammen. Die Innenseite 13 stellt hierbei eine Innenfläche des Reibringes 5 und die Außenseite 14 eine äußere Umfangsseite des Reibrings 5 bereit. Der erste Reibkegel 3 kommuniziert mit der Innenseite 13 des Reibrings 5 über eine erste Reibringlauffläche 15 und der zweite Reibkegel 4 kommuniziert mittels einer zweiten Reibringlauffläche 16 mit der Außenseite 14 des Reibringes 5.

Im ordnungsgemäßen Betriebszustand des Reibringgetriebes 2 bewegt sich der Reibring 5 in axialer Richtung 11 auf den Reibringlaufflächen 15 bzw. 16 mittels an sich bekannter Verstelleinrichtungen (nicht dargestellt), so dass eine Kräfte- bzw. Drehmomentenwandlung mittels der beteiligten Hauptgetriebeglieder 1 vorgenommen werden kann. Hierzu ist der Reibring 5 in einer geeigneten Vereelleinrichtungen (hier nicht gezeigt) des Reibringgetriebes 2 geführt. Mittels der Verstelleinrichtungen kann in der Regel bereits gewährleistet werden, dass der Reibring 5 nicht über die Reibringlaufflächen 15 bzw. 16 axial hinaus bewegt wird.

Um bei einer Störung des Reibringgetriebes 2 insbesondere hinsichtlich der Verstelleinrichtungen, eine Notlaufeigenschaft und damit eine ausreichende Betriebssicherheit des Reibringgetriebes 2 zu gewährleisten, sind an dem ersten Reibkegel 3 erste axiale Reibringsicherungsmittel 17 vorgesehen, welche in Gestalt eines ersten Absatzes 18 an einem schmalen Ende 19 des ersten Reibrings 3 angedreht sind. Mittels des ersten Absatzes 18 kann verhindert werden, dass der Reibring 5 über seine erste axiale Endposition 6 hinaus gerät und hierbei sowohl die erste Reibringlauffläche 15 als auch die zweite Reibringlauffläche 16 verlässt.

Damit dies auch hinsichtlich der zweiten axialen Endposition 7 gewährleistet werden kann, ist der zweite Reibkegel 4 an seinem schmalen Ende 20 mit zweiten axialen Reibringsicherungsmitteln 21 in Gestalt eines zweiten Absatzes 22 angedreht.

Da sowohl der erste Absatz 18 als auch der zweite Absatz 22 den Spalt 10 zwischen den beiden Reibkegeln 3 und 4 verjüngen bzw. verengen können, können diese beiden Absätze 18 bzw. 22 auch als Verjüngungsmittel 23 (hier nur hinsichtlich des ersten Absatzes 18 beziffert) definiert werden.

Vorteilhafter Weise sind die axialen Reibringsicherungsmittel 17 bzw. 22 bzw. die Verjüngungsmittel 23 an einem ersten Rand 24 (siehe insbesondere Figur 2) der ersten Reibringlauffläche 15 bzw. an einem weiteren ersten Rand 25 (siehe insbesondere Figur 3) der zweiten Reibringlauffläche 16 platziert, so dass wirkungsvoll ein Überschreiten der beiden Reibringlaufflächen 15 bzw. 16 verhindert werden kann.

Um die Massen der beiden Absätze 18 und 22 möglichst gering zu halten und eine möglichst geringe Relativgeschwindigkeit zwischen dem Reibring 5 und den Absätzen 18, 22 zu gewährleisten, sind letztere jeweils an den schmalen Enden 19 bzw. 22 der Reibkegel 3 bzw. 4 vorgesehen.

So kann mittels des Absatzes 18 des ersten Reibkegels 3 ein Überschreiten der Reibringlauffläche 16 an einem gegenüberliegenden ersten Rand 26 des zweiten Reibkegels 4 konstruktiv einfach verhindert werden.

Gleiches gilt auch hinsichtlich des zweiten Rands 25 des zweiten Kegels 4 gegenüber dem ersten Kegel 3.

Zumindest der zweite Absatz 22 ist nach der Darstellung der Figur 1 oberhalb der ersten Reibringlauffläche 15 angeordnet. Vorzugsweise trifft dies auf alle axialen Reibringsicherungsmittel 17 bzw. 22 und/oder Verjüngungsmittel 23 zu.

Um eine Reibung zwischen den Absätzen 18 bzw. 22 und dem Reibring 5 im Falle eines kritischen Betriebszustandes des Reibringgetriebes 2 möglichst gering zu halten, weist bei diesem Ausfühurngsbeispiel der erste Absatz 19 eine erste Hinterschneidung 27 und der zweite Absatz 22 eine zweite Hinterschneidung 28 auf, wobei die beiden Hinterschneidungen 27 und 28 jeweils der Reibringlauffläche 15 bzw. 16 zugewandt ist. Durch die Hinterschneidungen 27, 28 werden bei den Absätzen 18, 22 jeweils ringscheibenförmige Anlageflächen ausgebildet, die um eine Achse umlaufen, die zu der Reibringotationsachse 12 parallel liegen, so dass der Reibring 5 möglichst wenig belastet wird.

Der Reibring 5 (siehe Figur 4) weist zumindest an seinen den axialen Reibringsicherungsmitteln 17 bzw. 22 und/oder den Verjüngungsmitteln 23 und der jeweiligen Reibringlauffläche 15, 16 zugewandten Seiten einen ersten Kantenradius 31 mit einem Wert größer 1/100 der Reibringbreite 32 und einen zweiten Kantenradius 33 mit einem Wert größer als 1/27 der Reibringbreite 32 auf.

Darüber hinaus kann der Wirkungsgrad und das Gesamtverhalten des vorliegenden Reibringgetriebes 2 mit Naphten-Öl 35 als weitere Getriebekomponente 36, welche lediglich in der Darstellung nach Figur 1 in dem Spalt 10 als umherspritzendes Traktionsfluid 37 schematisch dargestellt ist, verbessert werden.

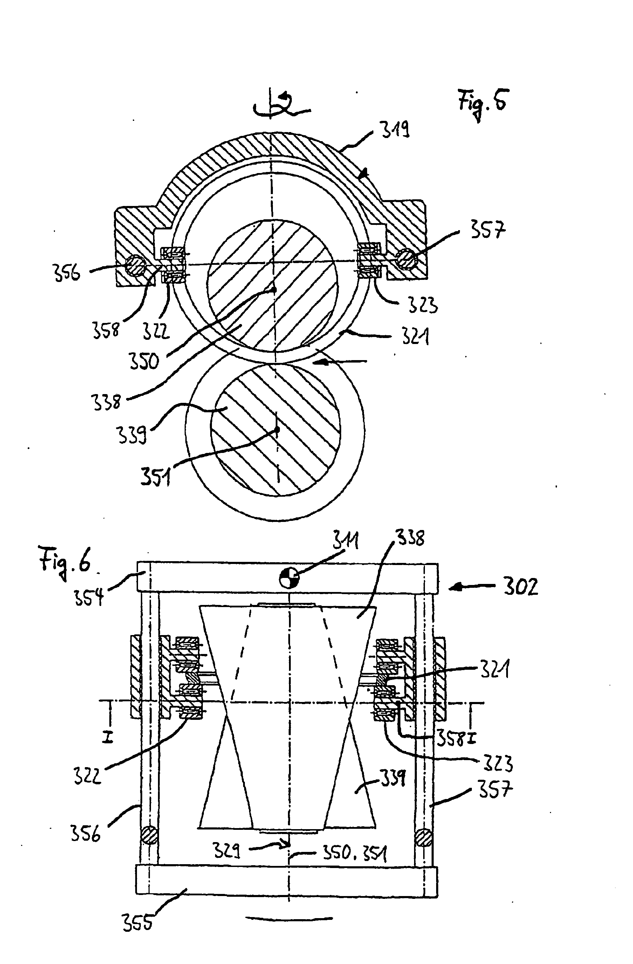

Wie in Figuren 5 und 6 dargestellt, kann eine Führungseinrichtung für den Reibring 5, dort als Reibring 321 bezeichnet, eine Verstellbrücke 319, welche den Reibring 321 führt, und . einen Käfig 302, an welchem die Verstellbrücke 319 geführt ist, aufweisen. Hierbei wirkverbindet der Reibring 312 zwei auf parallelen Wälzkörperachsen 350, 351 mit radialem Abstand (siehe Pfeil in Figur 5) angeordnete Reibkegel 338 und 339. Die Reibkegel 338, 339 sind zueinander gegensinnig angeordnet und haben gleiche Kegelwinkel β. Zwischen den Reibkegeln 338 und 339 ist also der den radialen Abstand überbrückende Reibring 321 angeordnet, der den ersten Reibring 338 umgibt und in dem Käfig 302 gehalten ist.

Der Käfig 302 besteht aus einem Rahmen, der von zwei Querhäuptern 354 und 355 und zwei darin aufgenommenen parallelen Führungsachsen 356 und 357 gebildet ist Diese Führungsachsen 356, 357 sind parallel zu den Wälzkörperachsen 350, 351 angeordnet und tragen axial frei verlagerbar die Verstellbrücke 319 mit zwei aufeinander zuweisenden Zapfen 358 (hier nur exemplarisch beziffert), auf denen ein erster Reibringhalter 322 bzw. ein zweiter Reibringhalter 323 sitzen, die jeweils aus zwei parallel zueinander angeordneten Rollen gebildet sind. Die Reibringhalter 322, 323 greifen beiderseits des Reibrings 321 an und geben diesem die notwendige axiale Führung. Es versteht sich, dass auch andere Anordnungen, die eine entsprechende Führung gewährleisten, vorteilhaft zur Anwendung kommen können, so reicht beispielsweise ggf. lediglich eine Führungsachse aus.

Die Mitte des Querhauptes 354 bildet eine lotrechte Schwenkachse 311, um die der gesamte Käfig 302 schwankbar ist.

Die Schwenkachse 311 liegt bei diesem Ausführungsbeispiel in der durch die Wälzkörperachsen 350, 351 der Reibkegel 338, 339 bestimmten Eben 329. Statt der Ebene 329 kann auch eine hierzu parallele Ebene oder eine Eben, welche die Ebene 329 unter einem spitzen Winkel schneidet, gewählt werden.

Wird der Käfig 302 um wenige Winkelgrade verschwenkt, so bewirkt der Reibantrieb eine axiale Verstellung des Reibrings 321, welcher die Verstellbrücke 319 frei folgt, und damit eine Änderung des Übersetzungsverhältnisses der Reibkegel 338 und 339. Hierzu genügt ein winziger Energieaufwand.

Bezugsziffemliste:
- 1: Hauptgetriebeglieder
- 2: Reibringgetriebe
- 3: erster Reibkegel
- 4: zweiter Reibkegel
- 5: Reibring
- 6: erste axiale Endposition
- 7: zweite axiale Endposition
- 8: erste Rotationsachse
- 9: zweite Rotationsachse
- 10: Spalt
- 11: axiale Richtung
- 12: Reibringotationsachse
- 13: Innenseite
- 14: Außenseite
- 15: erste Reibringlauffläche
- 16: zweite Reibringlauffläche
- 17: erste axiale Reibringsicherungsmittel
- 18: erster Absatz
- 19: schmales Ende
- 20: schmales Ende
- 21: zweite axiale Reibringsicherungsmittel
- 22: zweiter Absatz
- 23: Mittel zum Verjüngen
- 24: erster Rand
- 25: zweiter Rand
- 26: gegenüberliegender erster Rand
- 27: erste Hinterschneidung
- 28: zweite Hinterschneidung
- 29: erste zugewandte Seite
- 30: zweite zugewandte Seite
- 31: erster Kantenradius
- 32: Reibringbreite
- 33: zweiter Kantenradius
- 35: Naphten-Öl
- 36: weitere Getriebekomponente
- 37: Traktionsfluid
- 302: Käfig
- 311: Schwenkachse
- 319: Verstellbrücke
- 321: Reibring
- 322: Reibringhalter
- 323: Reibringhalter
- 329: Ebene
- 338: Reibkegel
- 339: Reibkegel
- 350: Wälzkörperachse
- 351: Wälzkörperachse
- 354: Querhaupt
- 355: Querhaupt
- 356: Führungsachse
- 357: Führungsachse
- 358: Zapfen

## Patentansprüche

1. Reibringgetriebe (2) mit einem Reibring (5), mit einem ersten Reibkegel (3) umfassend eine erste Reibringlauffläche (15) sowie einen ersten Rand (24) der ersten Reibringlauf fläche (15), mit einem zweiten Reibkegel (4) umfassend eine zweite Reibringlauffläche (16) sowie einen weiteren ersten Rand (25) der zweiten Reibringlauffläche (16) und mit axialen Reibringsicherungsmitteln (17, 21) zum Verhindern eines kritischen Reibringlaufflächenüberschreitens des Reibrings (5), bei welchem der Reibring (5) an den Reibringlaufflächen (15, 16) und in einem Spalt (10) zwischen den Reibkegeln (3, 4) axial frei verlagerbar angeordnet ist, wobei der Reibring (5) zur axialen Verlagerung entlang des Spaltes (10) um eine Schwenkachse (311) verschwenkbar ist und die Schwenkachse (311) lotrecht zu zwei Wälzkörperachsen (350, 351) der beiden Reibkegel (3, 4; 338, 339) steht, **dadurch gekennzeichnet, dass** die axialen Reibringsicherungsmittel (17, 21) an jeweils einem der beiden ersten Ränder (24, 25) der Reibringlaufflächen (15, 16) angeordnet sind und dass die axialen Reibringsicherungsmittel (17, 21) an jeweils einem axialen Ende (19, 20) der beiden Reibringlaufflächen (15, 16) mit dem geringeren Reibringlaufflächenumfang angeordnet sind.

2. Reibringgetriebe (2) nach Anspruch 1, **dadurch gekennzeichnet, dass** die axialen Reibringsicherungsmittel (17, 21) mit jeweils einem Reibkegel (3, 4) umlaufend ausgebildet sind.

3. Reibringgetriebe (2) nach Anspruch 1 oder 2, **dadurch gekennzeichnet, dass** beide Reibkegel (3, 4) als axiale Reibringsicherungsmitlel Mittel (23) zum Verjüngen des Spaltes (10) aufweisen und dass die Verjüngungsmittel (23) an jeweils einem axialen Ende (19, 20) der beiden Reibringlaufflächen (15, 16) mit dem geringeren Reibringlaufflächenumfang angeordnet sind.

4. Reibringgetriebe (2) nach einem der vorstehenden Ansprüche, **dadurch gekennzeichnet, dass** die axialen Reibringsicherungsmittel (17, 21)
an einem ersten Rand (24) der Reibringlauffläche (15) eines ersten (3) der beiden Reibkegel (3, 4) derart angeordnet sind, dass der Reibring (5) einen gegenüberliegenden ersten Rand (26) der Reibringlauffläche (16) eines weiteren (4) der beiden Reibkegel (3, 4) nicht oder nur unwesentlich überschreiten kann.

5. Reibringgetriebe (2) nach einem der vorstehenden Ansprüche, **dadurch gekennzeichnet, dass** die axialen Reibringsicherungsmittel (17, 21) an einem axialen Ende einer Reibringlauffläche (15, 16) einen Absatz (18, 22) aufweisen und dass der Absatz (18, 22) eine Hinterschneidung aufweist, welche einer Reibringlauffläche (15, 16) zugewandt ist.

6. Reibringgetriebe (2) nach Anspruch 5, **dadurch gekennzeichnet, dass** der Absatz (18, 22) an einem der Reibkegel (3, 4) angedreht ist.

7. Reibringgetriebe (2) nach einem der Ansprüche 5 bis 6, **dadurch gekennzeichnet, dass** axial beidseits des Spalts (10) jeweils ein Absatz (18, 22) vorgesehen ist.

8. Reibringgetriebe (2) nach einem der vorstehenden Ansprüche, **dadurch gekennzeichnet, dass** der Reibring (5) zumindest an seinen den axialen Reibringsicherungsmitteln (17, 21) sowie dem Reibkegel, an welchem die Reibringsicherungsmitteln (17, 21) angeordnet sind, zugewandten Kante (29, 30) Kantenradien (31, 33) mit einem Radius (31) größer als 1/100 der Reibringbreite (32), vorzugsweise mit einem Radius (33) größer als 1/27 der Reibringbreite (32), aufweist.

9. Reibringgetriebe nach einem der vorstehenden Ansprüche, **dadurch gekennzeichnet, dass** die Reibringsicherungsmittel (17, 21) eine Anlagefläche aufweisen, die um eine Achse rotiert, die parallel zu der Rotationsachse des Reibrings ausgerichtet ist.

## Claims

1. A friction ring transmission (2), having a friction ring (5), having a first friction cone (3) comprising a first friction ring running surface (15) and a first edge (24) of the first friction ring running surface (15), having a second friction cone (4) comprising a second friction ring running surface (16) and a further first edge (25) of the second friction ring running surface (16), and having axial friction ring securing means (17, 21) for preventing the friction ring running surface from critically exceeding the friction ring (5), in which the friction ring (5) is arranged in an axially freely displaceable manner on the friction ring running surfaces (15, 16) and in a gap (10) between the friction cones (3, 4), wherein the friction ring (5) can be pivoted about a pivot axis (311) for axial displacement along the gap (10), and the pivot axis (311) is perpendicular to two rolling body axes (350, 351) of the two friction cones (3, 4; 338, 339), **characterised in that** the axial friction ring securing means (17, 21) are each arranged on one of the two first edges (24, 25) of the friction ring running surfaces (15, 16) and that the axial friction ring securing means (17, 21) are each arranged on one axial end (19, 20) of the two friction ring running surfaces (15, 16) with the smaller friction ring running surface circumference.

2. The friction ring transmission (2) according to Claim 1, **characterised in that** the axial friction ring securing means (17, 21) are each constructed in a circumferential manner with one friction cone (3, 4).

3. The friction ring transmission (2) according to Claim 1 or 2, **characterised in that** the two friction cones (3, 4) have means (23) for narrowing the gap (10) as an axial friction ring securing means and that the narrowing means (23) are each arranged on one axial end (19, 20) of the two friction ring running surfaces (15, 16) with the lower friction ring running surface circumference.

4. The friction ring transmission (2) according to one of the preceding claims, **characterised in that** the axial friction ring securing means (17, 21) are arranged on a first edge (24) of the friction ring running surface (15) of a first (3) of the two friction cones (3, 4) in such a manner that the friction ring (5) can exceed an opposite first edge (26) of the friction ring running surface (16) of a further (4) of the two friction cones (3, 4) only insubstantially or not at all.

5. The friction ring transmission (2) according to one of the preceding claims, **characterised in that** the axial friction ring securing means (17, 21) have a shoulder (18, 22) at an axial end of a friction ring running surface (15, 16) and that the shoulder (18, 22) has an undercut which faces a friction ring running surface (15, 16).

6. The friction ring transmission (2) according to Claim 5, **characterised in that** the shoulder (18, 22) is worked onto one of the friction cones (3, 4) by turning.

7. The friction ring transmission (2) according to one of Claims 5 to 6, **characterised in that** a shoulder (18, 22) is provided axially on both sides of the gap (10) in each case.

8. The friction ring transmission (2) according to one of the preceding claims, **characterised in that** the friction ring (5) has edge radii (31, 33) with a radius (31) greater than 1/100 of the friction ring width (32), preferably with a radius (33) greater than 1/27 of the friction ring width (32), at least on the edge (29, 30) of the friction ring which faces the axial friction ring securing means (17, 21) and the friction cone on which the friction ring securing means (17, 21) are arranged.

9. The friction ring transmission according to one of the preceding claims, **characterised in that** the friction ring securing means (17) have a contact face which rotates about an axis which is aligned parallel to the rotation axis of the friction ring.

## Revendications

1. Mécanisme de transmission à anneau de friction (2) doté d'un anneau de friction (5), d'un premier cône de friction (3) comprenant une première surface de frottement d'anneau de friction (15) et un premier bord (24) de la première surface de frottement d'anneau de friction (15), d'un second cône de friction (4) comprenant une seconde surface de frottement d'anneau de friction (16) et un autre premier bord (25) de la seconde surface de frottement d'anneau de friction (16) et de moyens axiaux de blocage d'anneau de friction (17, 21) pour empêcher un dépassement critique de la surface de frottement de l'anneau de friction (5), sur lequel l'anneau de friction (5) est disposé sur les surfaces de frottement d'anneau de friction (15, 16) et dans une fente (10) entre les cônes de friction (3, 4) de façon à pouvoir se déplacer librement dans le sens axial, l'anneau de friction (5) pouvant pivoter le long de la fente (10) autour d'un axe de pivotement (311) pour le déplacement axial et l'axe de pivotement (311) étant perpendiculaire aux deux axes du corps de roulement (350, 351) des deux cônes de friction (3, 4 ; 338, 339), **caractérisé en ce que** les moyens axiaux de blocage d'anneau de friction (17, 21) sont disposés sur respectivement l'un des deux premiers bords (24, 25) des surfaces de frottement d'anneau de friction (15, 16) et **en ce que** les moyens axiaux de blocage d'anneau de friction (17, 21) sont disposés sur respectivement une extrémité (19, 20) axiale des deux surfaces de frottement d'anneau de friction (15, 16) avec la circonférence plus petite de la surface de frottement d'anneau de friction.

2. Mécanisme de transmission à anneau de friction (2) selon la revendication 1, **caractérisé en ce que** les moyens axiaux de blocage d'anneau de friction (17, 21) sont réalisés sur la périphérie avec respectivement un cône de friction (3, 4).

3. Mécanisme de transmission à anneau de friction (2) selon la revendication 1 ou 2, **caractérisé en ce que** les deux cônes de friction (3, 4) présentent comme moyens axiaux de blocage d'anneau de friction des moyens (23) pour le rétrécissement de la fente (10) et **en ce que** les moyens de rétrécissement (23) sont disposés sur respectivement une extrémité (19, 20) axiale des deux surfaces de frottement d'anneau de friction (15, 16) avec la circonférence plus petite de la surface de frottement d'anneau de friction.

4. Mécanisme de transmission à anneau de friction (2) selon l'une quelconque des revendications précédentes, **caractérisé en ce que** les moyens axiaux de blocage d'anneau de friction (17, 21) sont disposés sur un premier bord (24) de la surface de frottement d'anneau de friction (15) d'un premier (3) des deux cônes de friction (3, 4), de sorte que l'anneau de friction (5) ne peut pas dépasser ou ne peut dépasser que très légèrement d'un premier bord (26) opposé de la surface de frottement d'anneau de friction (16) d'un autre (4) des deux cônes de friction (3, 4).

5. Mécanisme de transmission à anneau de friction (2) selon l'une quelconque des revendications précédentes, **caractérisé en ce que** les moyens axiaux de blocage d'anneau de friction (17, 21) présentent un décrochement (18, 22) sur une extrémité axiale d'une surface de frottement d'anneau de friction (15, 16) et **en ce que** le décrochement (18, 22) présente une contre-dépouille, qui est tournée vers une surface de frottement d'anneau de friction (15, 16).

6. Mécanisme de transmission à anneau de friction (2) selon la revendication 5, **caractérisé en ce que** le décrochement (18, 22) est façonné au tour sur l'un des cônes de friction (3, 4).

7. Mécanisme de transmission à anneau de friction (2) selon l'une quelconque des revendications 5 à 6, **caractérisé en ce qu'**à chaque fois un décrochement (18, 22) est prévu axialement des deux côtés de la fente (10).

8. Mécanisme de transmission à anneau de friction (2) selon l'une quelconque des revendications précédentes, **caractérisé en ce que** l'anneau de friction (5) présente au moins sur ses arêtes (29, 30), tournées vers les moyens axiaux de blocage d'anneau de friction (17, 21) et vers le cône de friction, sur lequel les moyens de blocage d'anneau de friction (17, 21) sont disposés, des rayons d'arête (31, 33) avec un rayon (31) supérieur à 1/100 de la largeur d'anneau de friction (32), de préférence avec un rayon (33) supérieur à 1/27 de la largeur d'anneau de friction (32).

9. Mécanisme de transmission à anneau de friction selon l'une quelconque des revendications précédentes, **caractérisé en ce que** les moyens de blocage d'anneau de friction (17, 21) présentent une surface d'appui tournant autour d'un axe qui est orienté parallèlement à l'axe de rotation de l'anneau de friction.
